# EUROPEAN PATENT APPLICATION

(11) **EP 2 164 258 A1**
(43) Date of publication of application: **17.03.2010**
(21) Application number: 08765474.5
(22) Date of filing: 11.06.2008
(51) Int. Cl.: H04N 7/173, G06F 13/00

(54) **CONTENT DELIVERING APPARATUS, PROGRAM AND RECORDING MEDIUM**

(30) Priority: 11.06.2007 JP 2007154477
(71) Applicant: Sharp Kabushiki Kaisha, Osaka-shi, Osaka 545-8522 (JP)
(72) Inventor: TOYA, Tomoyuki, Osaka-shi, Osaka 545-8522 (JP)
(74) Representative: Müller - Hoffmann & Partner
(86) International application number: PCT/JP2008/060695
(87) International publication number: WO 2008/153067

(57) **Abstract**

A request processing section (12) receives a request of a content which a user desires to be delivered. A delivery destination specification section (14) specifies at least one or more of a plurality of content reproduction apparatuses which can reproduce the content requested. The request processing section (12) causes the user to operate a mobile terminal so as to select that of the content reproduction apparatuses specified by the delivery destination specification section (14) to which the content should be delivered. A content acquisition section (10) externally acquires the content. Then, a content delivery section (20) delivers the content to the content reproduction apparatus thus selected by the user. By this, the user can surely watch/listen to the content which he desires to be delivered, via the content reproduction apparatus.

## Description

### Technical Field

The present invention relates to a content delivery apparatus, a program, and a storage medium, each of which is for externally acquiring a content and delivering it to a content reproduction apparatus controlled by the content delivery apparatus.

### Background Art

It is a basic object of home network technologies to use any television in a house so as to view/listen to a variety of contents, including (i) a program recorded and stored in a home HDD (Hard Disk Drive) recorder or the like product, and (ii) a photograph shot by a digital camera and stored in a PC (Personal Computer). A concept for the above is often described by a key word "Location Free". Standards including DLNA (Digital Living Network Alliance) are being set up, and terminals supporting DLNA are launched on the market by various manufacturers.

The DLNA provides a controller called DMC (Digital Media Controller), a media server called DMS (Digital Media Server), and a renderer called DMR (Digital Media Renderer), wherein the DMC is operated so as to specify (i) a desired content (such as moving images, still images, audio sound, or the like contents) from contents stored up in the DMS and (ii) the DMR, in order to reproduce the desired content in the specified DMR.

Usually, a product such as a DLNA dedicated remote, a mobile telephone, or the like is chosen for the DMC, and a product such as a television, a PC, an audio device, or the like is chosen for the DMR. Some DMS, DMR, and/or DMC have multiple functions. For example, an apparatus having both the functions of the DMR and the DMC is called a player or a DMP (Digital Media Player).

Recently, a variety of inventions have been proposed for a system using apparatuses such as a household electrical apparatus, a reproduction apparatus, or the like, each of which apparatuses is connected to a home network including the DLNA.

For example, a patent literature 1 discloses an invention directed to provision of an interface, which allows access to a household electrical apparatus being connected to a home network. In specific, the invention is configured to use an internet technology so as to detect a variety of household electrical apparatuses connected to the home network, and is also configured to use the home network so as to control the household electrical apparatuses.

Further, like the patent literature 1, a patent literature 2 discloses an invention directed to provision of an interface, which allows access to a household electrical apparatus being connected to a home network. By a configuration disclosed in the patent literature 2, a digital television which operates as a client and household electrical apparatuses which operates as servers are connected to the home network. In the digital television, an HTML file including control information on a household electrical apparatus or the like information is received from each of the household electrical apparatuses, decoded, and then displayed, so as to visually provide a user with the control information on the each household electrical apparatus.

Furthermore, a patent literature 3 discloses an invention directed to a technique of (i) quickly selecting a reproduction apparatus which a user desires to use, from a plurality of reproduction apparatuses on a home network, and (ii) reproducing a content stored in a mobile terminal, via the reproduction apparatus thus selected. Specifically, the invention is configured as follows. From a plurality of content reproduction apparatuses on a home network, descriptions are acquired. Then, an apparatus list of the plurality of content reproduction apparatuses is presented to a user, based on the description thus acquired. When the user selects one content reproduction apparatus in the apparatus list thus presented, the selected content reproduction apparatus performs informing so as to show the user that it is selected by the user.

### Citation List

Patent Literature 1
   Japanese Patent Application Publication, Tokukai, No. 2003-209893 A (Publication Date: July 25, 2003)
Patent Literature 2
   Japanese Patent Application Publication, Tokukai, No. 2004-30631 A (Publication Date: January 29, 2004)
Patent Literature 3
   Japanese Patent Application Publication, Tokukai, No. 2006-134315 A (Publication Date: May 25, 2006)

### Summary of Invention

However, each of the aforementioned conventional configurations is directed simply to a technique for a home network. Thus, for example, in a case where only a DLNA is provided, the user cannot freely view/listen to a content stored in a DMS provided in a user's house, by use of a DMR installed in a house other than the user's house.

It is assumed that in a local network provide outside of the user's house, the user views/listens to a content stored in a DMS in a user's house, by externally accessing the DMS via a home gateway. On this assumption, the user uses a terminal on the local network (such as DMR to be used outside the user's house so as to view/listen to a content) for the first time on his visit to a place (such as a friend's house or hotel) where the local network other than the home network is provided. For this, the user cannot carry out in advance: preparing a content in a data format which is reproducible by the DMR installed outside the user's house; or configuring, for the home gateway, the settings (e.g., a protocol used for delivering of a content) which are compatible with delivering of a content to the DMR installed outside of the user's house.

For example, in the case of viewing an AV content, the user may use a television installed in the hotel, whose screen size is noticeably different from that of a television being used in the user's house. It is thought that a content stored up in the DMS in the user's house is often adjusted to an aspect ratio of a television screen in the user's house. In consideration of this, it would be better to convert the content, including its aspect ratio, than to view the content without alternation, if the television in the user's house has a screen with an aspect ratio of 9 : 16 while the television in the hotel has a screen with an aspect ratio of 4 : 3.

Within the home network, stable broadband communication is made possible due to LAN. On the other hand, an internet bandwidth in which an external access to the home network is to be made varies occasionally, depending on a condition including a communication environment or a communication path in a place where the content is viewed/listed to. As such, it can be thought that streaming may sometimes be harder to be used. In such cases, it may be possible to comfortably view/listen to a content by giving up transmitting a data by a streaming protocol and, instead, carrying out a file transfer.

There may be a case in which to the user who visits the friend or a relative, a plurality of apparatuses is available at a friend's or relative's house. In this case, it may be impossible to view/listen to the content in a room where the user currently is, whereas it may be possible to view/listen to the content if the user uses an apparatus installed in a next room. Also, even in a case where it is possible to view/listen to the content in the room where the user currently is, it may be possible to more comfortably view/listen to the content in the next room. In either case, it may be necessary, depending on an apparatus to use, to convert content data and a protocol.

With regard to the above, each of the inventions disclosed in the patent literatures 1 and 2 makes it possible that control information on a household electrical apparatus or the like information be collected from each of a plurality of household electrical apparatuses being connected to a home network, and then the collected information be graphically presented to the user. By this, the user can know that there is a television in another room. Also, the inventions disclosed in the patent literatures 1 and 2 allow the user to carry out control on the television located in another room (such as, turning on/off of the television, channel switching, volume adjustment, or the like). Further, with the invention disclosed in the patent literature 3, it is possible to acquire a list of information on a plurality of the reproduction apparatus being on the home network, and to use the list so as to select a reproduction apparatus to use.

Nevertheless, none of the inventions disclosed in the patent literatures 1 through 3 is configured so as to present information on a television function or the like (e.g., information on a screen size, a used codec, or the like) with respect to the television located in another room. However, with regard to the content which the user is to watch/listen, there are various possibilities of watching/listening it, including: using a television located in another room so that it will be possible to enjoy the content in large screen, even if it is impossible to enjoy the content in a television located in a room where the user currently is due to a reproduction function or the like of the television; and converting a codec or altering a transmission method, so that it will be possible to enjoy the content even in the television located in the room where the user currently is. However, because the user has no way to be aware of such possibilities, he must give up enjoying the content.

The present invention is made in view of the problem, and an object of the invention is to realize a content delivery apparatus, a program, and a storage medium, each of which makes it possible that a user select a content reproduction apparatus via which the user can surely watch/listen to a content which he desires to be reproduced.

In order to attain the object, a content delivery apparatus of the present invention is configured so as to be a content delivery apparatus for delivering a content to at least one of a plurality of content reproduction apparatuses which are controlled by the content delivery apparatus, the content delivery apparatus including: acquisition means for externally acquiring the content; specification means for specifying at least one of the plurality of content reproduction apparatuses which can reproduce the content; and content delivery means for delivering the content to the at least one of the plurality of content reproduction apparatuses which is specified by the specification means.

By the configuration, the content delivery apparatus delivers the content to any of the content reproduction apparatuses being controlled by the content delivery apparatus. In the content delivery apparatus, the content to be delivered is not provided in advance. As such, the content delivery apparatus externally acquires the content via, for example, a communications network. A more specific example can be raised in which the content delivery apparatus in a friend's house acquires a content in a user's house via a gateway apparatus in the user's house via a gateway apparatus in the user's house, which gateway apparatus makes the content externally available and externally provides the content.

For example, the content delivery apparatus externally acquires a content selected by the user, and delivers it to a content reproduction apparatus. For delivery of the content, the content delivery apparatus specifies, as the content reproduction apparatus reproducible of the content, at least one of the plurality of the content reproduction apparatuses being controlled by the content delivery apparatus. For example, in a case where content information on a content "a" shows a format which is the same as a content format compatible with a content apparatus "A" and thereby shown in apparatus information on the content apparatus "A", the content delivery apparatus specifies the content reproduction apparatus "A" as an apparatus reproducible of the content "a".

By this, the content delivery apparatus delivers the externally acquired content to the content reproduction apparatus thus specified. For example, consider a case in which apparatuses A, B, and C are specified as content reproduction apparatuses each reproducible of the content "a". In this case, the content delivery apparatus can deliver the content "a" to any one of the apparatuses A, B, and C or to all of the apparatuses A, B, and C. In either case, the user can enjoy the content "a" in a content reproduction apparatus to which the content "a" is delivered. That is, it is possible to surely watch/listen to the content "a" stored in the user' house, even in a case where the user, who visits the friend's house unfamiliar to him, transfers the content "a" to the specified apparatus(es).

As described above, the content delivery apparatus of the present configuration brings about an effect that the user can enjoy a desired content in a content reproduction apparatus with certainty.

For a fuller understanding of the nature and advantages of the invention, reference should be made to the ensuing detailed description taken in conjunction with the accompanying drawings.

### Brief Description of Drawings

Fig. 1

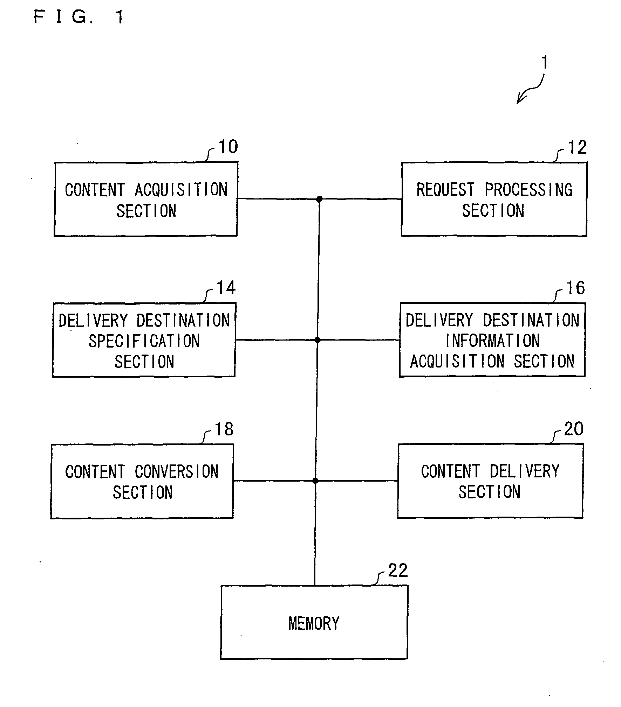

   Fig. 1 is a diagram showing a configuration of an FGW in accordance with a present embodiment.
Fig. 2

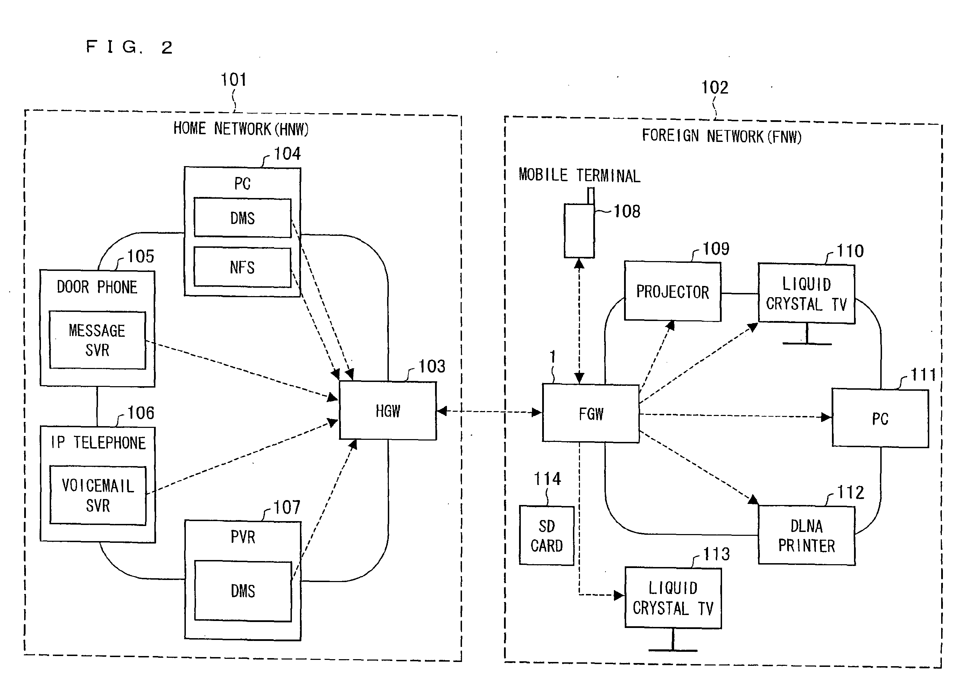

   Fig. 2 is a diagram showing a configuration of a content delivery system in accordance with the present embodiment.
Fig. 3

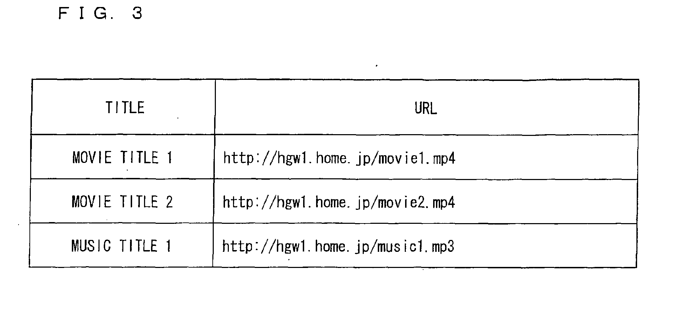

   Fig. 3 is a view showing one example of a content list.
Fig. 4

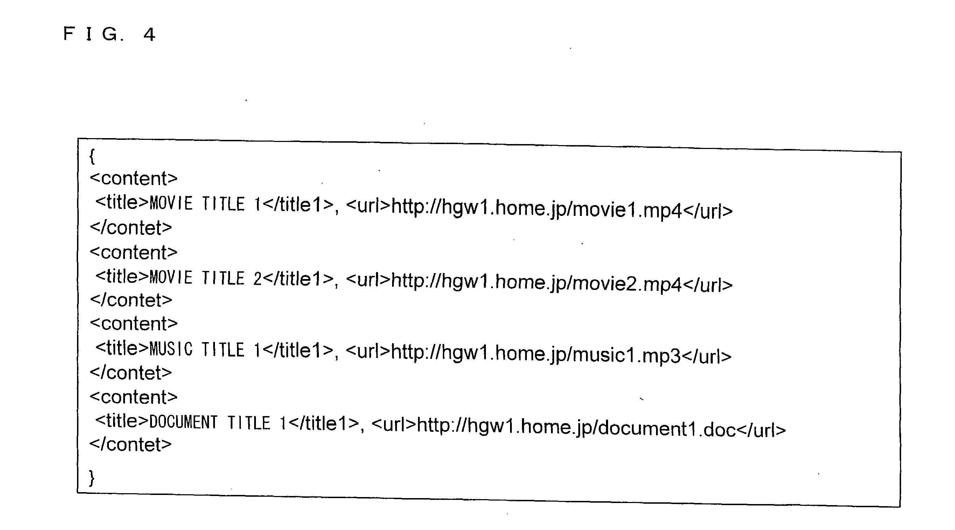

   Fig. 4 is a view showing a data structure of the content list.
Fig. 5

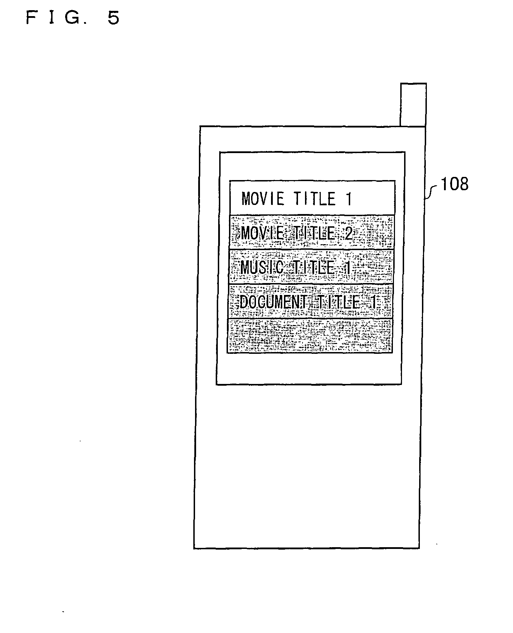

   Fig. 5 is a view showing a mobile terminal displaying the content list to a user.
Fig. 6

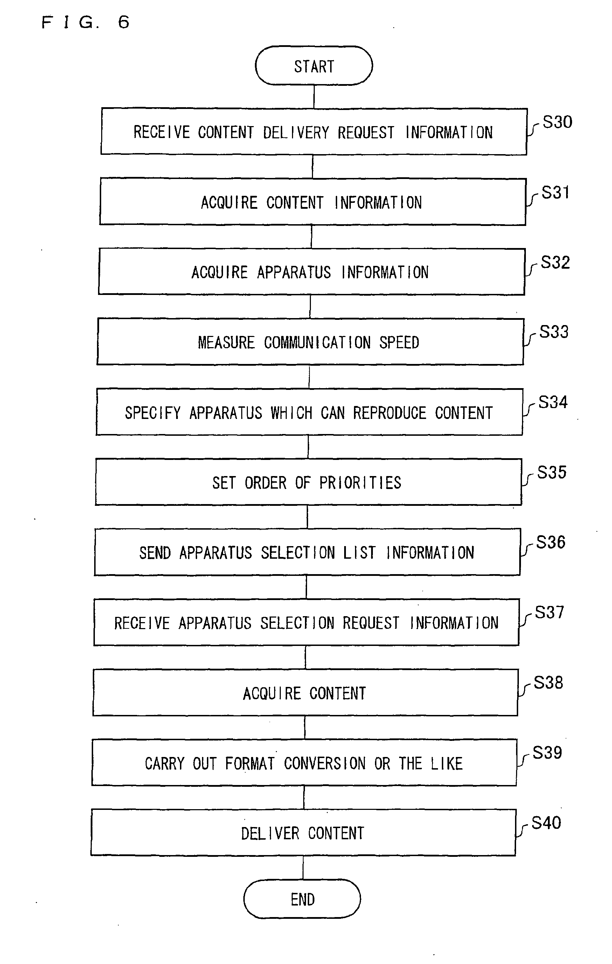

   Fig. 6 is a flow chart of a content delivery process in the present embodiment.
Fig. 7

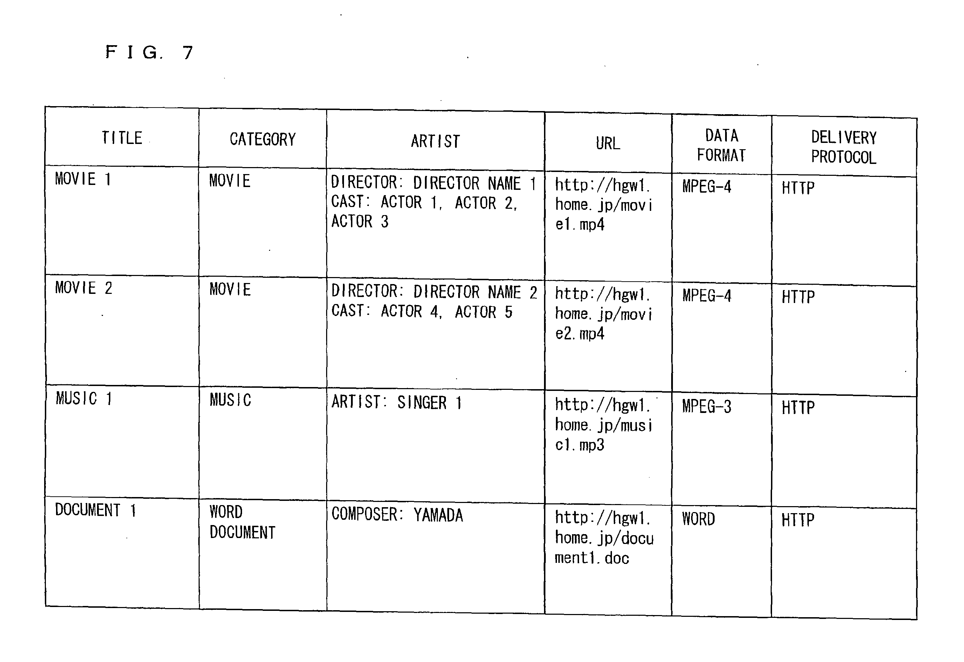

   Fig. 7 is an explanatory view showing one example of content information.
Fig. 8

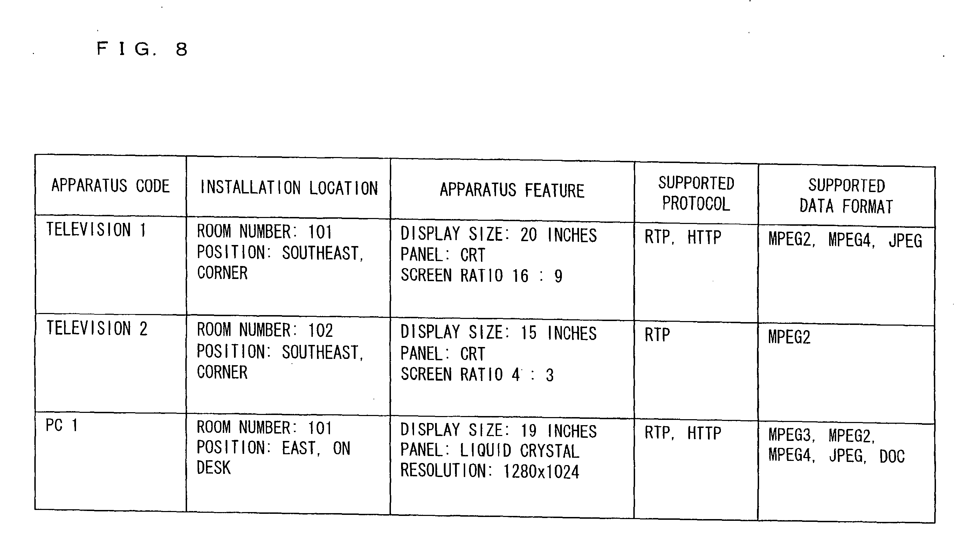

   Fig. 8 is a view showing one example of apparatus information.
Fig. 9

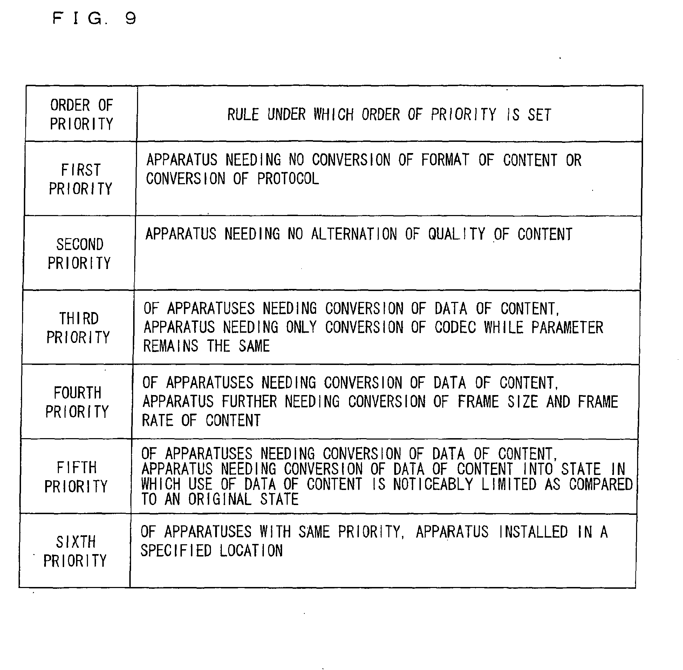

   Fig. 9 is a view showing a rule under which an order of priorities is set for apparatuses which can reproduce a content, pieces of information on the apparatuses being to be displayed accordingly to the order of priorities.
Fig. 10

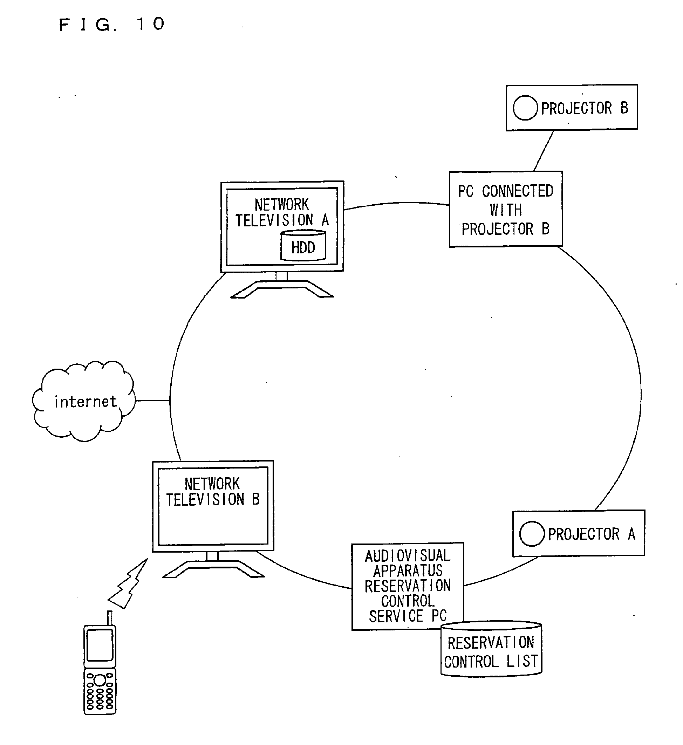

   Fig. 10 is a block diagram showing a content delivery system in accordance with another embodiment of the present invention.
Fig. 11

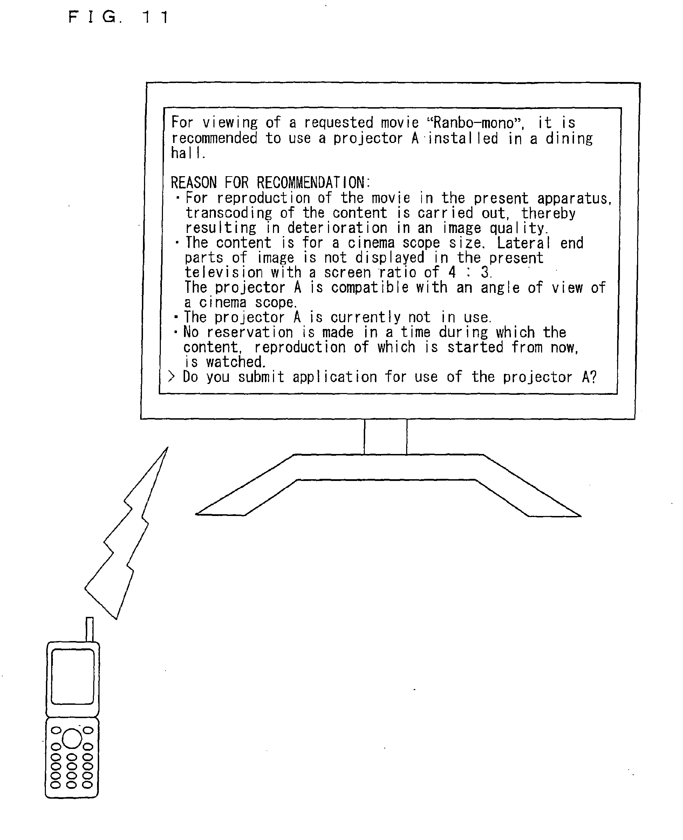

   Fig. 11 is a view of a network television showing a message.
Fig. 12

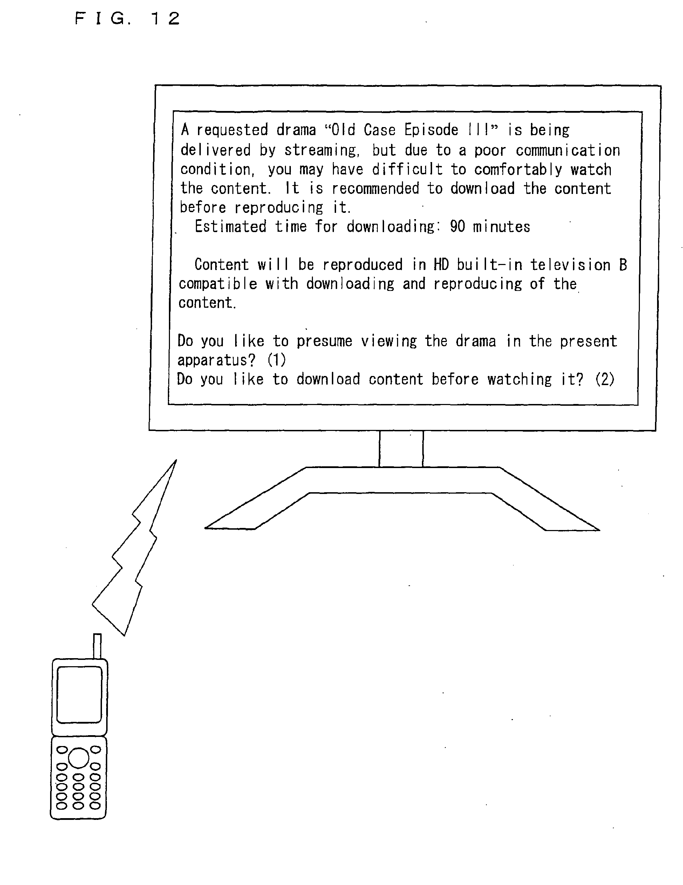

   Fig. 12 is a view of the network television showing a message.
Fig. 13

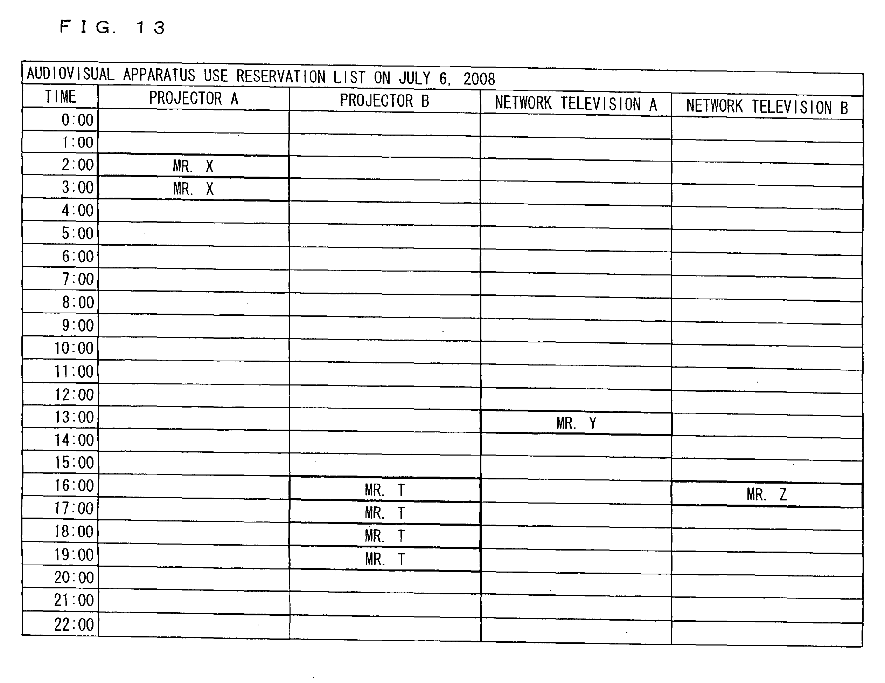

   Fig. 13 is a view showing a reservation control list.
Fig. 14

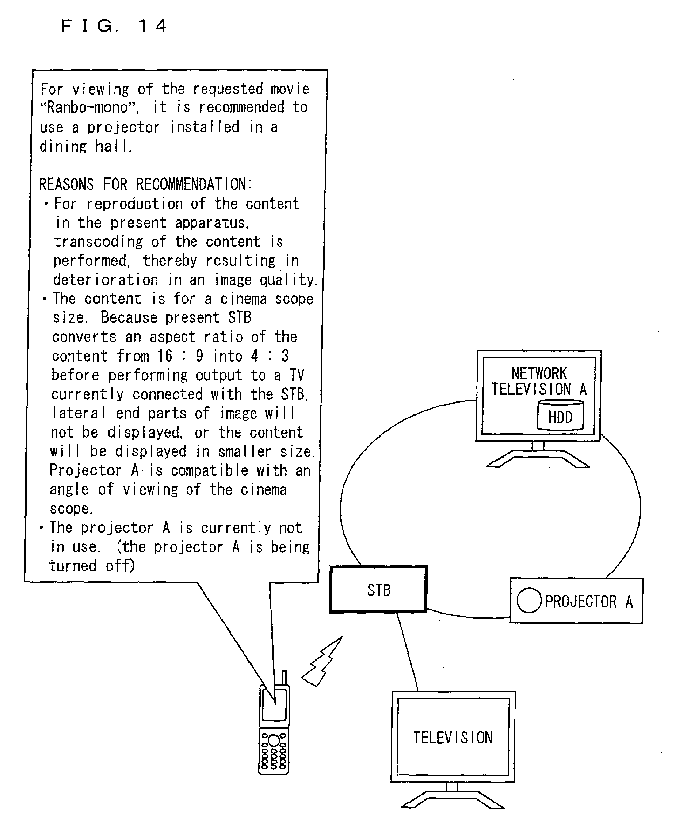

   Fig. 14 is a view of a mobile phone showing a message.
Fig. 15

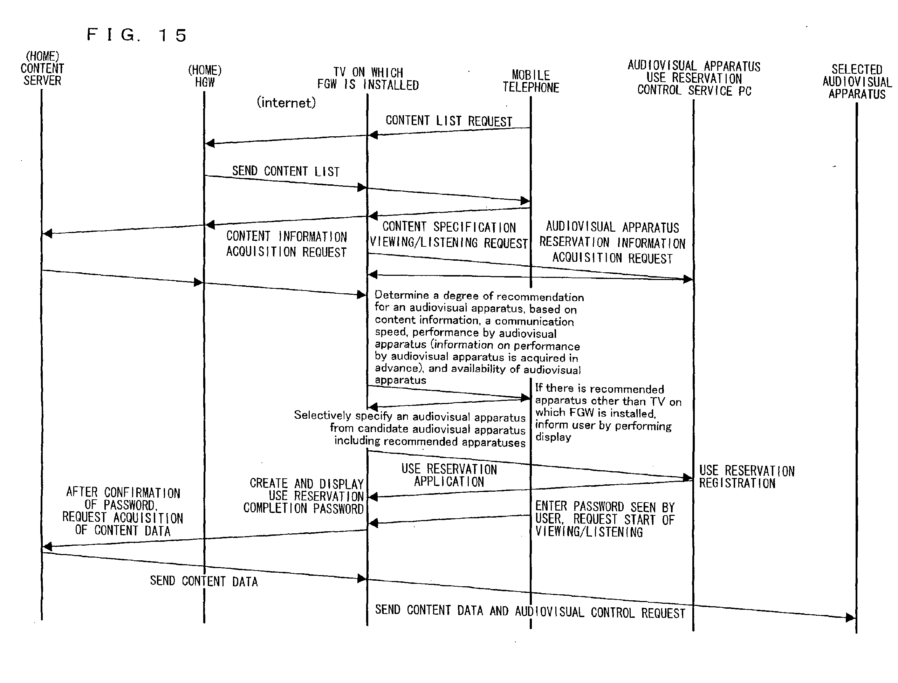

   Fig. 15 is a sequence chart of a process flow in the content delivery system.

### Reference Signs List

1. Foreign gateway (content deliver apparatus)
10. Content acquisition section
12. Request processing section (Input means, selection means)
14. Delivery destination specification section (specification means, judgment means)
16. Delivery destination information acquisition section
18. Content conversion section (conversion means)
20. Content delivery section (delivery means)
22. Memory
101. Home network
102. Foreign network
103. Home gateway
108. Mobile terminal
109. Projector (content reproduction apparatus)
110. Liquid crystal TV (content reproduction apparatus)
111. PC (content reproduction apparatus)
112. DLNA printer (content reproduction apparatus)
113. Liquid crystal TV (content reproduction apparatus)

### Description of Embodiments

One embodiment of the present invention is described below with reference to Figs. 1 through 9.

### (Summary of System Configuration)

First, a content delivery system of the present embodiment is described with reference to Fig. 2. Fig. 2 is a diagram showing a configuration the content delivery system in accordance with the present invention. As schematically illustrated in Fig. 2, the content delivery system includes a home network (hereinafter referred to as an HNW) 101 provided in a user house and a foreign network (hereinafter referred to as an FNW) 102 provided outside the user house.

The HNW 101 includes a home gateway (HGW) 103 for controlling apparatuses in the HNW 101. On the other hand, the FNW 102 includes a foreign gateway (FGW) 1 for controlling apparatuses in the FNW 102.

For convenience, the HNW 101 and the FNW 102 are independently described. Note however that their roles may be interchangeable with each other. In consideration of this, it is preferable that the HGW 103 also have a function of the FGW 1, and that the FNW 102 also have a function of the HGW 103. Further, it is preferable that the HNW 101 also have a function of the FNW 102, and that the FNW 102 also have a function of the HNW 101.

### (Configuration of HNW 101)

The HNW 101 includes a PC (Personal Computer) 104, a door phone 105, an IP phone 106, and a PVR (Personal Video Recorder) 107 (see Fig. 2). The following briefly explains each of them.

The PC 104 can operate as a DMS, and stores a variety of contents such as music or a movie. The PC 104 supports an NFS (Network File System), so as to be also able to use a shared folder on a Windows (registered trademark) network. Further, the PC 104, on which a variety of software using a number of protocols is installed, also supports a DLNA and UPnP (Universal Plug and Play).

The door phone 105 can operate as a message server. As such, the door phone 105 records an audio message of and an image of a visitor, and stores audio data and image data as respective contents.

The IP phone 106 can operate as an answering machine. As such, the IP phone 106 records a voice message of a caller, and stores audio data as a content.

The PVR 107 can operate as a DMS. As such, the PVR 107 records a TV program or the like, and stores recorded data as contents.

### (Configuration of FNW 102)

The FNW 102 includes the FGW 1. A configuration of the FGW 1 is explained below with reference to Fig. 1. Fig. 1 is a diagram showing the configuration of the FGW 1. As shown in the drawing, the FGW 1 includes a content acquisition section 10, a request processing section 12 (input means, selection means, content reproduction request reception means), a delivery destination specification section 14 (specification means, judgment means), a delivery destination information acquisition section 16, a content conversion section 18 (conversion means), a content delivery section 20, and a memory 22. Their functions are to be described later.

Furthermore, the FNW 102 includes, as apparatuses (content reproduction apparatuses) which can reproduce a content, a projector 109, a liquid crystal TV 110, a PC 111, a DLNA printer 112, and a liquid crystal TV 113. Each of the apparatuses reproduces a content which has been acquired by the FGW 1, such as a moving image or a still image. For example, some apparatuses reproduce an image and audio sound, while others show an office document.

In an example raised in Fig. 2, the liquid crystal TV 113 is not connected to the FNW 102. However, the liquid crystal TV 113 is still able to reproduce the content acquired by the FGW 1. In this case, the content acquired by the FGW 1 is recorded in an SD card 114, which is then loaded into the liquid crystal TV 113. This allows the liquid crystal TV 113 to reproduce the content recorded in the SD card 114.

### (HGW 103)

From each of the apparatuses in the HNW 101, the HGW 103 collects information on a content which is available to a network provided outside the HNW 101. Accordingly, a list of contents available to the public is created. The list of contents available to the public is to be explained later.

### (Mobile Terminal 108)

The mobile terminal 108 communicates with the HGW 103 via close range radio communications using infrared communication or Bluetooth (registered trademark). Alternatively, it is possible to employ (i) an alternative configuration in which a communication is carried out via a mobile phone network and the internet or (ii) another alternative configuration in which a communication is carried out by connecting to the HNW 101 via a wireless LAN.

### (Provision of Communication Pathway between FGW 1 and HGW 103)

The following description deals with an example in which a user having an HNW 101 in his house (i) brings out a mobile terminal 108 to a friend's house where an FNW 102 is provided and (ii) views and/or listen to a content stored in a DMS on the HNW 101 via an apparatus controlled by an FGW 1 in the friend's house.

In conformity with the user's operation, the mobile terminal 108 acquires, from the HGW 103 in advance, access authorization information which allows the user to access the HGW 103. Note that the access authorization information includes (i) a communication address which is specified as a destination to be accessed so that a function of the HGW 103 is used, and (ii) a user ID and an authentication password or (iii) an electronic certification for identification of a terminal. The user, who brings out the mobile terminal 108 in which the access authorization information is stored, can access the home network HNW 101 from a place where he is.

In conformity with the user's operation, the mobile terminal 108 sends, to the FGW 1, access authorization information required for accessing the HGW 103. Subsequently, the FGW 1 provides the received access authorization information to the HGW 103. In a case where the HGW 103 confirms that right access authorization information is provided, the HGW 103 allows the FGW 1 to access the HGW 103. Thereafter, the FGW 1 can acquire from the HGW 103 (i) the content on the HNW 101 and (ii) information on such content.

In the present embodiment, a VPN (Virtual Private Network) is provided between the HGW 103 and the FGW 1, thereby assuring security for the communication between the HGW 103 and the FGW 1. Accordingly, the FGW 1 sends, as access authentication information to the HGW 103, information such as information on cryptographic key necessary for encoding.

The VPN is a technology directed to formation of a virtual private network. After a secure communication path is provided, data communication of encoded data is carried out. The VPN encompasses a number of established technologies such as IPSec and SSL VPN. The FGW 1 is applicable to any VPN technology. After the VPN is provided, the FGW 1 logs in, with the use of the user ID and the user password, to a remote access function with respect to the HGW 103.

In the HGW 103, access authorization information is prepared for each user. That is, according to the HGW 103, a range in which each user can externally access the contents on the HNW 101 is set in association with corresponding access permission information. This allows a degree of access limitation to the contents on the HNW 101 to vary from a user to a user.

### (Acquisition of Content List)

After provision of communication connection between the FGW 1. and the HGW 103, the FGW 1 requests the HGW 103 to provide the FGW 1 with a content list (i) which is available to the user who has logged in and (ii) which is a list of the contents on the HNW 101.

The HGW 103 is supplied with an HTTP server. As such, the FGW 1 issues an HTTP request (content reproduction request) for requesting the HGW 103 to provide the FGW 1 with the content list. The access authorization information includes URL information which is for acquisition of the content list. On reception of the request of the content list from the FGW 1, the HGW 103 sends back the list of the available contents (i.e., the list of the contents which the logged in user is authorized to access) to the FGW 1. One example of the content list is shown in Fig. 3. Fig. 3 is a view showing one example of the content list. According to the example of the content list shown in Fig. 3, combinations of (i) titles of the contents which the mobile terminal 108 is authorized to access and (ii) URLs where the contents are provided by the HGW 103 are arranged. An example of a data structure of the content list is shown in Fig. 4. Fig. 4 is a view showing a data structure of the content list. In the example shown in Fig. 4, (i) each content of a movie title 1, a movie title 2, a music title 3, and a document title 4 is associated with a corresponding URL where the FGW 1 acquires a corresponding one of the contents. In the present embodiment, the HGW 103 provides the FGW 1 with the content list having the data structure shown in Fig. 4.

Then, the FGW 1 sends the content list received from the HGW 103 to the mobile terminal 108 via infrared data communication. In a case where the mobile terminal 108 has only an infrared transmitting function, the FGW 1 can send, to the mobile terminal 108, an electronic mail to which the content list is attached. In any case, the mobile terminal 108 acquires the content list from the FGW 1 in some way or other. Subsequently, the mobile terminal 108 provides the user with the content list thus acquired from the FGW 1 (see Fig. 5). Fig. 5 is a view of the mobile terminal 108 providing the user with the content list. In an example shown in Fig. 5, the mobile terminal 108 prepares a list of the titles included in the data shown in Fig. 4, and display it as the content list.

With reference to Fig. 6, the following explains a process flow starting from the time when the FGW 1 receives a delivery request of the content and ending at the time when the FGW 1 delivers the content specified in the delivery request. Fig. 6 is a flow chart of the content delivery process in accordance with the present embodiment.

### (Sending of Request Information)

First, the user operates the mobile terminal 108 so as to select a content, which the user desires to be delivered, in the content list displayed on a screen of the mobile terminal 108. Then, the mobile terminal 108 sends, to the FGW 1, request information indicating that the user desires a delivery of the content thus selected. Specifically, the mobile terminal 108 sends, as content delivery request information, the information for specifying the content which the user desires to be delivered. Hereinafter, the content selected by the user is referred to as a content W.

It is to be noted that when receiving the content delivery request information, the FGW 1 also carries out an authentication process so as to identify the user and the mobile terminal 108.

In the FGW 1, a request processing section 12 receives the content delivery request information sent from the mobile terminal 108 (S30). Then, the request processing section 12 supplies the content delivery request information thus received to a content acquisition section 10. The content acquisition section 10 specifies the content W with reference to the content delivery request information thus received. By this, the FGW 1 requests the HGW 103 to send the FGW 1 information (content information) on the content W. Subsequently, the FGW 1 acquires the content information from the HGW 103 (S31).

### (Acquisition of Content Information)

The HGW 103 stores information on content in a memory, for each content to be delivered to the outside. For storing of the information on content, the HGW 103 obtains such information from each apparatus on the HNW 101 in advance. The HGW 103 provides the FGW 1 with the content information on the content W, which the content acquisition section 10 requests the HGW 103 to provide. The content acquisition section 10 receives the content information provided from the HGW 103. By above-described processes, the content acquisition section 10 acquires the information on the content W.

The content information includes: meta-information of a content itself; information specifying a category of a content such as a video, music, or an office file; and information indicative of attributes of a content which include a codec and a data format compatible with an installed application (player) and an available parameter and a data size of a content. The content information further includes information specifying a delivery method (such as a communication protocol), which is available when the HGW 103 sends a content to the FGW 1. One example of the content information is shown in Fig. 7. Fig. 7 is an explanatory view showing the one example of the content information.

It is to be noted that the HGW 103 supports a variety of communication protocols such as the DLNA, which are used in household electrical network apparatuses. As such, the HGW 103 sends information on such communication protocols, as the content information, to the FGW 1.

Further, the HGW 103 can carry out, if necessary, (i) data conversions including a codec conversion and (ii) a conversion of a communication method, before providing the content on the HNW 103 to the FGW 1.

In a case where a conversion of the content format or the protocol allows the HGW 103 to use of a plurality of formats or a plurality of communication methods to send an identical content to the FGW 1, the HGW 103 also sends information on such conversion, as the content information, to the FGW 1.

### (Apparatus Information)

The delivery destination specification section 14 specifies, out of a plurality of the apparatuses on the FNW 102, an apparatus(es) which can reproduce the content W. During specifying of such an apparatus(es), the delivery destination specification section 14 uses the content information on the content W and information (apparatus information) on the apparatuses on the FNW 102. One example of the apparatus information is shown in Fig. 8. Fig. 8 is a view showing the one example of the apparatus information. According to the example shown in Fig. 8, the apparatus information lists, for each apparatus, information on (i) an apparatus name, (ii) a location where the apparatus is located, (iii) an apparatus characteristic, (iv) a protocol which the apparatus supports, and (v) a data format which the apparatus supports.

In the FGW 1, the delivery destination information acquisition section 16 individually acquires apparatus information from each of the apparatuses on the FNW 102. For example, the delivery destination information acquisition section 16 acquires apparatus information on the projector 109 from the projector 109, and acquires apparatus information on the liquid crystal TV 110 from the liquid crystal TV 110. Then, the delivery destination information acquisition section 16 stores in the memory 22 pieces of the information thus acquired.

The apparatus information is information specifying (i) a type of and a data format of a content which each apparatus can reproduce, (ii) a delivery method (communication protocol) available when reproduction of the content is to be carried out, and the like.

### (Specifying of Apparatus(es) Which can Reproduce Content)

In the FGW 1, the delivery destination specification section 14 acquires the content information from the content acquisition section 10, and retrieves the apparatus information from the memory 22 (S32). Then, the delivery destination specification section 14 specifies an apparatus(es) which can reproduce the content W, with reference to the content information and the apparatus information. Along with specifying of the apparatus(es), the delivery destination specification section 14 creates apparatus selection list information, which is information on the apparatus(es) specified.

### (Specifying of Apparatus with Reference to Format Information)

The delivery destination specification section 14, for example, compares (i) format information in the content information with (ii) format information in the apparatus information on the projector 109. In a case where both pieces of the format information are identical to each other, the delivery destination specification section 14 specifies the projector 109 as an apparatus which can reproduce the content W. Thus, the delivery destination specification section 14 adds, into the apparatus selection list information, information for (such as information indicating an apparatus name) specifying the projector 109.

The content conversion section 18 of the FGW 1 can convert a content into different format data. For example, the content conversion section 18 can convert MPEG 2 data into MPEG 4 data, and can alternatively convert H. 264 data into MPEG 2 data. In the memory 22 of the FGW 1, there is stored in advance a correlation table showing that a content format can be converted into which content format(s). The content conversion section 18 selects a conversion method by which the content format is converted, with reference to the correlation table.

Even if the format information in the content information differs from the format information in the apparatus information of an apparatus, the delivery destination specification section 14 specifies such an apparatus as the apparatus which can reproduce the content W in a case where it determines that the conversion of a format will allow such an apparatus to reproduce the content W. In this case, the delivery destination specification section 14 adds, into the apparatus selection list information, (i) information for specifying the apparatus and (ii) information on conversion such as information for specifying a before-conversion format and an after-conversion format (i.e., information for specifying a format name or the like).

### (Specifying with Reference to Delivery Method Information)

The delivery destination specification section 14 also compares (i) delivery method information in the content information with (ii) delivery method information in the apparatus information of an apparatus. In a case where both pieces of the delivery method information are identical to each other (e.g., in a case where both the content information and the apparatus information contain a text "streaming manner" as the delivery method information), the delivery destination specification section 14 specifies such an apparatus as an apparatus which can reproduce the content W. Then, the delivery destination specification section 14 adds, into the apparatus selection list information, information on such an apparatus.

Even if the delivery method information in the content information differs from the delivery method information in the apparatus information of an apparatus, the mobile terminal 108 specifies such an apparatus as an apparatus which can reproduce the content W in a case where it determines that a change of a delivery method (e.g., change of a deliver method from the streaming method to a downloading method) will allow such an apparatus to reproduce the content W. In this case, information on the delivery method is added into the apparatus selection list information. The information on the delivery method includes: information indicating that the delivery method needs to be changed; and information showing how the delivery method is changed (e.g., information for showing a before-change delivery method and an after-change delivery method).

### (Specifying of Communication Speed)

Next, the content acquisition section 10 measures a communication speed at which a communication is carried out between the HGW 103 and the FGW 1 (S33). In this case, before the content W is reproduced, acquisition of the content W is started, and buffering is carried out with respect to the content W while the content acquisition section 10 is measuring the communication speed. This allows a reduction in time lag which occurs when the user starts actually viewing and/or listening to the content W.

The content acquisition section 10 provides the delivery destination specification section 14 with the communication speed thus measured. This allows the delivery destination specification section 14 to use information on the communication speed during specifying of an apparatus(es) which can reproduce the content W.

For example, it is assumed that the apparatus information on the liquid crystal TV 110 specifies that the liquid crystal TV 110 can reproduce (i) an MPEG 2 content and (ii) an MPEG 4 content in real time. On the assumption, in a case where the delivery destination specification section 14 determines, based on the information on a measured communication speed, that the current communication speed is insufficient for the user to view and/or listen to the MPEG 2 content in real time but sufficient for the user to view and/or listen to, in real time, the MPEG 4 content having a higher compressibility, the delivery destination specification section 14 specifies the liquid crystal TV 110 as an apparatus which can reproduce a content that has been subjected to MPEG 4 conversion. Then, the delivery destination specification section 14 adds, into the apparatus selection list information, information on the liquid crystal TV 110 and information on the MPEG 4 conversion.

On the other hand, in a case where the delivery destination specification section 14 determines that even if the content is converted into an MPEG 4 content, the communication speed is still unsatisfactory for the user to view and/or listen to the content in real time, then the delivery destination specification section 14 specifies the liquid crystal TV 110 as an apparatus which cannot reproduce the content. In this case, the delivery destination specification section 14 adds, into the apparatus selection list information, no information on the liquid crystal TV 110.

### (Converting of Content into Differently Viewed State)

The content conversion section 18 can convert an original content such that the original content is viewed as a profoundly different content. For example, the content conversion section 18 can convert a frame size of and a frame rate of the content. Further, the content conversion section 18 can interconvert the content so that the content can have either of screen sizes different from each other, e.g., screen sizes of 4 : 3 and 16 : 9.

### (Converting of Content into Format in Which Use of Content is Noticeably Limited)

The content conversion section 18 can also convert a format of a given content into another format in which use of the content is noticeably limited. For example, the content conversion section 18 can convert an editable file, including an editable word processor file and an editable spreadsheet file, into a JPEG file which is only available to be viewed.

With regard to a content composed of audio data and image data, some apparatuses can perform reproduction of a content only if either one of the audio data and the image data has been removed. Note that the delivery destination specification section 14 specifies such apparatuses as apparatuses which can reproduce the content.

### (Setting of Order of Priorities for Contents Based on Location)

When the user operates the mobile terminal 108 so as to request the delivery of the content W, the user may also enter, into the mobile terminal 108, a room number where the user is. In this case, the mobile terminal 108 sends, to the FGW 1, the room number entered by the user. Then, the delivery destination specification section 14 compares (i) room number information of the room number entered into the mobile terminal 108 by the user with (ii) room number information in apparatus information of an apparatus. Then, based on a result of comparison of content information and apparatus information, the delivery destination specification section 14 selects out an apparatus which can reproduce the content W, and specifies the apparatus as an apparatus whose information is more preferentially provided to the user.

### (Setting of Order of Priorities)

As described so far, the delivery destination specification section 14 specifies an apparatus which can reproduce the content W, by evaluating an apparatus as to variety of items with reference to content information and apparatus information (S 34). In some cases, the delivery destination section 14 specifies a plurality of apparatuses as apparatuses which can reproduce the content W. In these cases, the delivery destination specification section 14 sets an order of priorities for the plurality of apparatuses, based on a given rule, so that respective pieces of information on the plurality of apparatuses are provided to the user in accordance with the order of priorities thus set.

With reference to Fig. 9, the following explains how an order of priorities is set for apparatuses. Fig. 9 is a view showing a rule under which an order of priorities is set for apparatuses, respective pieces of information on the apparatuses being to be provided in accordance with the order of priorities.

As shown in Fig. 9, the delivery destination specification section 14 sets the highest priority to an apparatus which can directly reproduce the content W. Next, the delivery destination specification section 14 sets the second highest priority to an apparatus, which can reproduce the content W if at least one of a format of the content W or a communication method has been converted while no quality of the content W requires to be altered. Then, the delivery destination specification section 14 sets subsequent priorities to apparatuses which only can reproduce the content W whose data has been converted. That is, the delivery destination specification section 14 sets the third highest priority to that of the apparatuses, which can reproduce the content W whose data has been converted, if a codec has been converted while no parameter of the content W requires to be altered. Then, the delivery destination specification section 14 sets the fourth highest priority to that of the apparatuses, which can reproduce the content W whose data has been converted, if at least one of a frame size of and a frame rate of the content W has been converted. Then, the delivery destination specification section 14 sets the fifth highest priority to that of the apparatuses, which can reproduce the content W whose data has been converted, if the content W has been converted into a state in which use of the data of the content W is noticeably limited as compared to an original state. Note that in a case where two or more of apparatuses can reproduce the content on the same condition, the delivery destination specification section 14 eventually sets a higher priority to that of the two or more of apparatuses which is located in a room with a room number which is specified by the user.

The delivery destination specification section 14 eventually creates the apparatus selection list information under the rule in Fig. 9, which apparatus selection list information includes information on an order of the priorities.

### (Selecting of Content Delivery Destination)

In the FGW 1, the delivery destination specification section 14 supplies the apparatus selection list information thus created to the request processing section 12. Then, the request processing section 12 sends the apparatus selection list information to the mobile terminal 10 (S 36). Subsequently, the mobile terminal 108 displays, on its screen, a list of the apparatuses included in an apparatus selection list of the apparatus selection list information. In this case, the delivery destination specification section 14 places apparatus names in order, based on the order of the priorities in the apparatus selection list, and displays them accordingly. Further, the display destination specification section 14 displays, with each of the apparatus names, information on whether or not at least either one of the format of the content W and the delivery method needs to be changed when the content W is reproduced by a corresponding one of the apparatuses. This allows the user to know in advance how the content W is to be converted so as to be reproduced, depending on an apparatus which the user selects.

The user selects out, from a plurality of the apparatuses displayed in the mobile terminal 108, one apparatus which the user desires to reproduce the content W. In response to this, the mobile terminal 108 creates apparatus selection request information for requesting a delivery of the content W to the selected apparatus, and then sends the apparatus selection request information to the FGW 1. The apparatus selection request information specifically includes: information for specifying an apparatus to which the content W is should be delivered; and information on a conversion method of and a communication method for the content W.

In the apparatus selection request information, an apparatus, which the user is otherwise not aware of, may be included. This allows the user to have a broader range of selection in which the user selects an apparatus which the user desires to the content W.

### (Delivery Process of Content)

In the FGW 1, the request processing section 12 receives the apparatus selection request information sent from the mobile terminal 108 (S 37). Then, the request processing section 12 sends the apparatus selection request information to each of the content acquisition section 10, the content conversion section 18, and the content delivery section 20.

With reference to the apparatus selection request information thus supplied, the content acquisition section 10 specifies a communication method which is to be used when the content W is acquired. Then, the content acquisition section 10 acquires the content W from the HGW 103 by the communication method thus specified (S 38).

Subsequently, the content acquisition section 10 supplies the content W acquired to the content conversion section 18. Then, with reference to the apparatus selection request list, the content conversion section 18 judges whether or not it is necessary to convert the content W thus supplied. If judging it necessary, the content conversion section 18 converts a format of the content W into an after-conversion format specified in the apparatus selection request information, and then supplies, to the content delivery section 20, the content W whose format has been subjected to conversion (S 39). On the other hand, if judging it unnecessary, the content conversion section 18 directly supplies the content W to the content delivery section 20.

The content delivery section 20 delivers the content W thus supplied, to an apparatus which is specified as a delivery destination in the apparatus selection request information (S 40).

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

For example, in advance, the delivery destination specification section 14 selects out, from a plurality of apparatuses controlled by the FGW 1, only an apparatus available to the user, and specifies the apparatus as an apparatus which can reproduce the content. That is, the delivery destination specification section 14 can alternatively avoid listing any apparatus unavailable to the user due to: limitation imposed on the mobile terminal 108, the user, and/or a location (room number) where the user is; and a usage status of the apparatus. Specifically, the delivery destination specification section 14 avoids specifying, as an apparatus which can reproduce the content W, any apparatus which is being tuned off. This is because the user cannot use any apparatus which is being turned off, even if the apparatus information specifies that the apparatus can reproduce the content W.

The apparatus information, for example, can include information on whether the apparatus is available to the user or not. In this configuration, for example, an apparatus available to the user only on payment of a fixed usage fee at a hotel is judged available to the user if the user pays a usage fee at the hotel.

Also, the apparatus information can include information for specifying a type of a content (media) which a content reproduction apparatus can reproduce. An example of such information encompasses information for indicating either one of a still image, a moving image, and music. Further, the apparatus information can include information for specifying a type of data which the content reproduction apparatus can process. Examples of such information encompass information for indicating a codec of a content, information for indicating a format of a content, and the like information.

Furthermore, the apparatus information can include information for indicating a protocol of a content. Examples of such information encompass information for indicating a protocol for delivering of a content, information for indicating a protocol which the content reproduction apparatus supports when carrying out reproduction of the content, information for indicating a profile allocated to the protocol, and the like information.

Moreover, the apparatus information can include information for indicating performance (specification) of the content reproduction apparatus. Examples of such information encompass information for indicating a screen size of the content reproduction apparatus, information for indicating an angle of view (displayable frame size) of the content reproduction apparatus, information for indicating an audio output (mono, stereo, 5.1ch sound, or the like) supported by the content reproduction apparatus, and the like information.

In addition, the apparatus information can include information for indicting setting of the content reproduction apparatus. Examples of such information encompass: information for indicating a location where the content reproduction apparatus is installed (information indicative of a room name, a floor, an installation condition). Further, the examples of the information encompass information for indicating a current status of the content reproduction apparatus (information indicating whether the content reproduction apparatus is in use or not). Furthermore, the examples of the information encompass information for indicating a use requirement of the content reproduction apparatus (information indicating whether the application reproduction apparatus is available or not, information indicating whether it is necessary to submit application in order to use the content reproduction apparatus or not, information indicating whether a usage fee is charged or not, information on a usage fee, or the like information).

The content delivery apparatus can display a requirement for reproduction of the content, concurrently with providing of a candidate for a content reproduction apparatus which can reproduce the content W. In the configuration, it is assumed that a plurality of content reproduction apparatuses are specified as content reproduction apparatuses which can reproduce the same content. On this assumption, if a requirement for reproduction of the content varies from a content reproduction apparatus to a content reproduction apparatus, then the content reproduction apparatuses are shown as independent candidates to the user.

The content delivery apparatus can display, to the user, the followings items as requirements for reproduction of a content. Also, the content delivery apparatus can display, to the user, (i) a reproduction apparatus which the user has selected out and (ii) information with reference to which the user has selected out the reproduction apparatus. The items are:
- whether it is necessary to convert a content or not;
- parameters (a codec type, an encode bit rate, a parameter encode bit rate) to be used when the content is converted;
- reproduction method (streaming or downloading) for the content;
- a condition at time when reproduction of the content is being carried out (an expected time from an amount of buffering or downloading, during which expected time the user should wait for a start of reproduction of the content, i.e., initial viewing of the content);
- whether a content reproduction apparatus is currently available to he user or not (in a case where the content reproduction apparatus is being used by someone else, it is displayed that the content reproduction apparatus is unavailable);
- a location where the content reproduction apparatus is installed (whether the content reproduction apparatus is installed in a common space, whether the content reproduction apparatus is installed in a location near the user or in a location away from the user, whether the content reproduction apparatus is installed in the same floor where the user is or in another floor); and
- requirement for use of a content reproduction apparatus (whether the user himself has a permission to use the content reproduction apparatus, whether it is necessary to submit application in order to use the content reproduction apparatus or not, usage fee).

In another embodiment, the content delivery apparatus can send, to an apparatus such as a mobile telephone or the like, pieces of information on the above described items. The mobile telephone can show selectable reproduction apparatuses to the user by carrying out display which will lead the user to select out an reproduction apparatus from the selectable reproduction apparatuses.

### (Example in Which FGW 1 is Installed in Television)

The following explains a content delivery system in accordance with another embodiment of the present invention.

Fig. 10 is a block diagram showing the content delivery system in accordance with another embodiment of the present invention. The content delivery system in the drawing includes: a network television A; a network television B; a projector A; a projector B; a PC connected to the projector B; and an audiovisual apparatus reservation control service PC.

In the content delivery system, a plurality of content reproduction apparatuses are provided on one LAN (Local Area Network). The network television A has a function of an FGW 1. The network television B includes a HDD (Hard Disk Drive), so as to be able to reproduce a television content stored in the HDD.

Both the projectors A and B support a cinema scope size. That is, both the projectors A and B include a reproduction function compatible with an angle of view with which no television is compatible. It is assumed that the projector A is not currently in use, whereas the projector B is currently in use.

On the assumption, a user is near the network television A. The user operates a mobile telephone so as to request viewing (reproduction) of a content. A viewing request includes an ID (URL) of the content. The user operates the mobile telephone so as to also send a password serving as a key, with use of which the user access, via the FGW 1, the content on a DLNA server provided at a user's house. In a case where a more suitable content reproduction apparatus is available, the network television A will informs the user of it. In specific, the network television A displays a message shown in Fig. 11. Fig. 11 is a view of the network television A displaying the message.

The network television will display a message shown in Fig. 12, in a case where a communication condition is poor for the user to acquire the content by streaming. Fig. 12 is a view of the network television A displaying the message.

The user can operate the mobile telephone so as to reserve a content reproduction apparatus recommended by the network television A. The mobile phone sends a use reservation request to the network television A.

When the user submits application for use of the content reproduction apparatus, information on reservation is written down into a reservation control list (database) controlled by the FGW 1. Note that the reservation control list can be stored in another apparatus accessible by the FGW 1. Specifically, when the user submits application for use of the projector A, reservation information of the projector A is written down into the reservation control list by the audiovisual apparatus reservation control service PC.

Fig. 13 is a view showing one example of a reservation control list. By registration of the reservation in the reservation control network, the network television A can carry out a charge processing. Specifically, in a case where a reproduction apparatus is reserved for one term (one hour), one-hundred yen is charged. When the content reproduction apparatus is reserved, a one-time password is sent to the FGW 1 (network television A), and displayed on a display of the network television A for a moment. Alternatively, the one-time password can be transferred to the mobile telephone. Unless the one-time password is used, content data will not be transferred via the FGW 1, so as not to allow the user to view any content.

The content delivery system can be alternatively configured such that the mobile telephone, instead of the network television A, displays the message on selection of the content reproduction apparatus. Fig. 14 is a view of the mobile telephone displaying the message. The content delivery system in Fig. 14 includes an STB (Set Top Box) having a function of the FGW 1. The STB is connected to the network television A and an HDMI. The STB sends a message described earlier to the mobile telephone, and causes the message to be displayed in the mobile telephone.

Fig. 15 is a sequence view showing a process flow in the content delivery system having the exemplary configuration shown in Fig. 10.

As shown in Fig. 15, the mobile telephone sends a request of a content list to the network television A (on which the FGW 1 is installed). Then, the network television A sends the request thus received to an HGW 103 via the Internet. On reception of the request, the HGW 103 sends the content list to the FGW 1. Then, the FGW 1 sends the content list thus received to the mobile telephone.

Subsequently, the mobile telephone sends a content specification viewing request to the network television A. The network television A sends an audiovisual apparatus reservation information acquisition request to the audiovisual apparatus reservation control server (service PC), and sends a content information acquisition request to the HGW 103.

The network television A determines a degree of recommendation for each audiovisual apparatus (content reproducing apparatus), based on the content information, a communication speed, performance of an audiovisual apparatus (information on which is acquired in advance), and an audiovisual apparatus reservation status. In a case where there is recommend an audiovisual apparatus other than the television on which the FGW 1 is installed, the mobile telephone receives information on the audiovisual apparatus recommended, and informs the user of it by displaying the information. The user operates the mobile telephone so as to selectively specifies, from audiovisual apparatuses including the audiovisual apparatus recommended, an audiovisual apparatus to use.

The mobile telephone sends, to the audiovisual apparatus reservation control server (service PC), application for use reservation for the content reproduction apparatus. Then, the audiovisual apparatus reservation control server registers the use reservation for the content reproduction apparatus. After registration of the use reservation is completed, the network television A creates a password, and displays the password to the user. The user enters, into the mobile telephone, the password which he has seen, and submits a request of a start of viewing. After confirming the password, the network television A requests the HGW 103 to provide the network television A with the content data. Subsequently, the content server sends the content data thus requested to the network television A. Then, the network television A sends the content data to a content reproduction apparatus selected by the user.

It can be alternatively configured such that the audiovisual apparatus use reservation control server is provided in the network television A in which the FGW 1 is installed. Further, it can be alternatively configured such that the user operates the mobile telephone so as to directly access the HGW 103 at the user's house via the Internet in order to acquire the content list.

### (Other Configurations)

The present invention can be also described as below.

### (First Configuration)

A content relay apparatus, including: a request processing section for processing a request which causes a specified content to be reproduced; a content use apparatus selection section for selecting apparatuses which can reproduce the specified content specified in the request; a content conversion method determination section for specifying content conversion methods for converting the specified content into data compatible with respective of the apparatuses selected by the content use apparatus selection section; a content sending method determination section for specifying sending methods for sending the specified content to respective of the apparatuses selected by the content use apparatus determination section; a content use method determination section for determining (i) that apparatus of the apparatuses selected by the content use apparatus selection section which is to be actually used and (ii) one or both of (a) that conversion method of the conversion methods specified by the content conversion method determination section which is to be actually used and (b) that sending method of the sending methods specified by the content sending method determination section which is to be actually used, with reference to information on the apparatuses selected out by the content use apparatus selection section, the conversion methods specified by the content conversion method determination section, and the sending methods specified by the content sending method determination section; a content acquisition section for acquiring content data of the content specified in the request; a content conversion section for converting the content data of the content acquired by the content acquisition section, by that conversion method of the conversion methods determined by the content use method determination section; a content sending section for supplying the content data of the content converted by the content conversion section, by that sending method of the sending methods which is determined by the content use method determination section.

### (Second Configuration)

The content relay apparatus as set forth in First Configuration, which includes a content use method provision section for providing, to a request source of the request which causes the content to be reproduced, pieces of information on (i) the apparatuses which are selected by the content use apparatus selection section, (ii) the conversion methods which are specified by the content conversion method determination section, and (iii) the sending methods which are specified by the content sending method determination section, the content use method determination section selecting an apparatus, a conversion method, and a sending method out of the apparatuses, the conversion methods, and the sending methods in the information provided by the content use method provision section, with reference to specification in a request for specifying a content use method.

### (Third Configuration)

The content relay apparatus as set forth in Second Configuration, wherein: the content use method provision section evaluates the pieces of information on (i) the apparatuses which are selected by the content use apparatus selection section, (ii) the conversion methods which are specified by the content conversion method determination section and (iii) the sending methods which are specified by the content sending method determination section, and performs display for each of the apparatuses which can reproduce the specified content, accordingly to rankings of evaluation.

### (Fourth Configuration)

The content relay apparatus as set forth in any of First through Third Configurations, wherein: the content conversion method determination section determines, in accordance with a content use function of each of the content reproduction apparatuses selected by the content use apparatus selection section, (i) how a content data format of the specified content specified in the request is converted and (ii) how the specified content having been subjected to conversion of content data format is sent to the each of the content reproduction apparatuses, so that the content can be reproduced in the each of the content reproduction apparatuses.

### (Fifth Configuration)

The content relay apparatus as set forth in First through Fourth Configurations, wherein: the content use method determination means provides the request source with at least one or more of (i) a prioritized list of the apparatuses which are selected by the content use apparatus selection section and (ii) a prioritized list of combinations of (a) the apparatuses which are selected by the content use apparatus selection section and (b) one or both of the conversion methods and the sending methods which are used with respective of the apparatuses, and determines an apparatus, a conversion method, and a sending method out of the apparatuses, the conversion methods, and the sending methods, with reference to a specification from the request source made based onto provision of the at least one or more of the lists.

### (Sixth Configuration)

The content relay apparatus as set forth in any of First through Fifth Configurations, wherein: the content use method determination means sets priorities by evaluating one or more of (i) availability of an apparatus, (ii) convertibility of an acquired content, and (iii) presence/absence of a sending method using an acquired protocol.

### (Seventh Configuration)

The content relay apparatus as set forth in Sixth Configuration, wherein: the content use method provision section avoids providing a user with at least one of (i) information on a content data format which is inappropriate for use of the specified content in a communication bandwidth provided at time when the specified content is being acquired and (ii) information on a sending method which is inappropriate for use of the specified content in the communication bandwidth provided at the time when the specified content is being acquired, and judges whether it is possible to reproduce the specified content by performing conversion.

### (Eighth Configuration)

The content relay apparatus as set forth in Second through Seventh Configurations, wherein: the content use method provision section sets availability/unavailability for each of the apparatuses selected by the content use apparatus selection section, by (i) setting availability/unavailability to the each of the apparatuses, based on identification of the each of the apparatuses or the user at a request source, (ii) removing an apparatuses from the list of the apparatuses which selected by the content use apparatus selection section, depending on a status of the apparatus (e.g., the apparatus is being used by another apparatus) or a positional relation between the apparatus and the apparatus at the request source, or (iii) setting an order of priorities for the apparatuses which selected by the content use apparatus selection section.

### (Ninth Configuration)

The content relay apparatus as set forth in any of First through Eight Configurations, wherein: the content conversion method determination means (i) inquires, from the content acquisition section, a format in which a server for providing a content to the content acquisition section can provide the content to the content acquisition section, and (ii) determines a content conversion method in the apparatus accordingly to a response to inquiry.

### (Program and Storage Media)

Finally, the blocks of the FGW 1 may be realized by way of hardware or software as executed by a CPU (Central Processing Unit) as follows.

The FGW 1 includes a CPU and memory devices (memory media). The CPU executes instructions in control programs realizing the functions. The memory devices include a ROM (Read Only Memory) which contains programs, a RAM (Random Access Memory) to which the programs are loaded in an executable manner, and a memory which contains the programs and various data.

In a configuration above, the objective of the present invention can also be achieved by a given storage medium. The storage medium should be a computer-readable storage medium containing control program code (executable program, intermediate code program, or source program) for the FGW 1, which is software realizing the aforementioned functions. The storage medium should be mounted to the FGW 1, and mounting of the storage medium allows the FGW 1, which is also a computer (or CPU, MPU), to retrieve and execute the program code contained in the storage medium thus mounted.

The storage medium which contains control program code for the FGW 1 is not limited in any particular structure or kind. The storage medium may be, for example, a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.

The objective of the present invention can also be achieved by configuring the FGW 1 connectable to a communications network. In this configuration, the program code may be delivered to the FGW 1 via the communications network. The communications network is not limited in any particular kind or arrangement, and may be, for example, the Internet, an intranet, extranet, LAN, ISDN, VAN, CATV communications network, virtual dedicated network (Virtual Private Network), telephone line network, mobile communications network, or satellite communications network.

The transfer medium which makes up the communications network can be any medium transferable of the program code, and thus is not limited in any particular configuration or kind. For example, the transfer medium can be wired line, such as IEEE 1394, USB (Universal Serial Bus), electric power line, cable TV line, telephone line, or ADSL (Asymmetric Digital Subscriber Line) line; or wireless, such as infrared radiation (IrDA, remote control), Bluetooth (registered trademark), 802.11 wireless, HDR, mobile telephone network, satellite line, or terrestrial digital network. The present invention encompasses a computer data signal transmission embedded in a carrier wave, in which the program code is embodied electronically.

It is preferable that the content delivery apparatus of the present invention be further configured such that the specification means specifies, as at least one of the plurality of content reproduction apparatuses which can reproduce the specified content, at least one of the plurality of content reproduction apparatuses which supports a format of the specified content.

By the configuration, for example, in a case where the format of the content is of MPEG 2, the content delivery apparatus specifies the content reproduction apparatus compatible with MPEG 2 as the content reproduction apparatus which can reproduce the content. Thus, it is possible that the content delivery apparatus surely specify the apparatus which can reproduce the content. This brings about an effect that delivers the content to the apparatus via which the user can surely view/listen to the content.

Further, it is preferable that the content delivery apparatus of the present invention be configured so as to further include:
judgment means for judging which of the plurality of content reproduction apparatuses can reproduce the specified content whose format has been converted into a given format; and
conversion means for converting, into the given format, the format of the specified content acquired by the acquisition means,
the specification means specifying, as the at least one of the plurality of content reproduction apparatuses which can reproduce the specified content, at least one of the plurality of content reproduction apparatuses that is judged by the judgment means to be able to reproduce the specified content whose format has been converted into the given format, and
the delivery means delivering, to the at least one of the plurality of content reproduction apparatuses, the specified content whose format has been converted into the given format.

By the configuration, for example, in a case where a content cannot be directly reproduced in a content reproduction apparatus, but can be reproduced in the content reproduction apparatus if a format of the content is converted into a given format, the content delivery apparatus specifies the content reproduction apparatus as an apparatus which can reproduce the content.

For example, in a case where a content "a" is of an MPEG 2 format, and a content reproduction apparatus "A" is an apparatus which cannot reproduce an MPEG 2 content, but can reproduce an MPEG 4 format, the content delivery apparatus specifies the content reproduction apparatus "A" as an apparatus which can reproduce the content "a". In this case, the content delivery apparatus does not simply deliver an acquired content "a" in the MPEG 2 format, but converts a format of the acquired content "a" into the MPEG 4 format and then delivers it to the content reproduction apparatus "A". Thus, the content "a" can be surely reproduced in the content reproduction apparatus "A", thereby allowing the user to view/listen to the content "a" via the content reproduction apparatus "A".

As described above, the content delivery apparatus of the present configuration brings about an effect that further increases the number of delivery destinations to which the content can be delivered. To the user, this further increases a possibility that the user can view/listen to the content.

Further, it is preferable that the content delivery apparatus of the present invention be configured such that:
the specification means specifies, as the at least one of the plurality of content reproduction apparatuses which can reproduce the specified content, at least one of the plurality of content reproduction apparatuses which supports a communication protocol to be used while the specified content is being delivered.

By the configuration, for example, in a case where streaming is the communication protocol to be used when the content is being delivered, the content delivery apparatus specifies, as an apparatus which can reproduce the content, a content reproduction apparatus supporting the streaming manner. Thus, it is possible that content delivery apparatus surely specify the apparatus which can reproduce the content. This brings about an effect that delivers the content to the apparatus via which the user surely view/listen to the content.

Furthermore, the content delivery apparatus of the present invention further includes judgment means for judging which of the plurality of content reproduction apparatuses can reproduce the specified content which has been delivered by a different delivery method than a predetermined delivery method,
the specification means specifying, as the at least one of the plurality of content reproduction apparatus which can reproduce the specified content, at least one of the plurality of content reproduction apparatuses which is judged by the judgment means to be able to reproduce the specified content which has been delivered by the different delivery method than the predetermined delivery method, and
the delivery means delivering, by the different delivery method than the predetermined method, the specified content to the at least one of the plurality of content reproduction apparatuses.

By the configuration, for example, in a case where the content cannot be directly reproduced in a content reproduction apparatus, but can be reproduced in the content reproduction apparatus if a delivery method (such as a communication protocol or the like) to be used for delivering of the content is converted into another delivery method, the content delivery apparatus specifies the content reproduction apparatus as an apparatus which can reproduce the content.

For example, it is assumed that a predetermined delivery method to be used for delivering of a content "a" is the streaming manner, and a content reproduction apparatus "A" is an apparatus which can receive and then reproduce a content that has been delivered by the downloading manner. On this assumption, if the content delivery apparatus can convert the delivery method for the content "a" from the streaming manner into the downloading manner, the content delivery apparatus specifies the content reproduction apparatus "A" as an apparatus which can reproduce the content "a". In this case, the content delivery apparatus delivers an acquired content "a" not in the streaming manner, but in the downloading manner. This allows the content "a" delivered to be surely reproduced in the content reproduction apparatus "A", thereby allowing the user to view/listen to the content "a" via the content reproduction apparatus "A".

As described above, the content delivery apparatus of the present configuration brings about an effect that further increases the number of the delivery destinations to which the content can be delivered. To the user, this further increases the possibility that the user can view/listen to the content.

Moreover, the content delivery apparatus of the present invention is configured so as to further include selection means for causing, in a case where the specification means specifies two or more of the plurality of content reproduction apparatuses, a user to select one of the two or more of the plurality of content reproduction apparatuses to which the specified content should be delivered,

the content delivery means delivering the specified content to the one of the two or more of the plurality of content reproduction apparatuses that is selected by the user via the selection means.

By the configuration, for example, in a case where the specification means specifies apparatuses "A", "B", and "C" as content reproduction apparatuses which can reproduce the content "a", the selection means shows names of the respective apparatuses "A", "B", and "C" to the user via, for example, a terminal apparatus brought out with the user, so as to lead him to select one of the apparatuses "A", "B", and "C". Then, the user selects an apparatus which the user desires to reproduce the content "a". This causes the content delivery apparatus to deliver the content "a" to a content reproduction apparatus that is selected by the user. For example, in a case where the user selects the apparatus "A" out of the apparatuses "A", "B", and "C", the content delivery apparatus acquires the content "a" via a communications network, and delivers it to the content reproduction apparatus "A".

Thus, the content delivery apparatus of the present configuration brings about an effect that delivers a content to a content reproduction apparatus most suitable for the user.

Moreover, it is preferable that the content delivery apparatus of the present invention be configured such that the selection means provides the user with information on a format of the specified content.

By the configuration, it is possible that the user know, in advance, as to what format conversion requires to be done so that the user can view/listen to the content. This brings about an effect that the user can flexibly select a content delivery apparatus which the user causes to reproduce the content, based on evaluation of the apparatus from a perspective of format conversion. For example, in a case where the user is provided with pieces of information on content reproduction apparatuses each of which can reproduce the content only if a format of the content has been converted, the user can select out a content reproduction apparatus which can reproduce, with a higher quality, the content whose format has been converted.

Moreover, it is preferable that the content delivery apparatus of the present invention be configured such that the selection means more preferentially provides the user with (i) information on that of the two or more of the plurality of content reproduction apparatuses which can directly reproduce the content having been acquired by the acquisition means, than (ii) information on another of the two or more of the plurality of content reproduction apparatuses which can reproduce the content whose format has been converted into a given format by the conversion means.

By the configuration, the content delivery apparatus more preferentially provides the user with information on that of the content reproduction apparatuses capable of reproducing the same content which can reproduce the content with a higher quality. In this case, the content delivery apparatus list pieces of information on a plurality of contents, with information on a preferential content being displayed on an upper portion of a screen. Also, it can be configured such that rankings of the respective content reproduction apparatuses are displayed along with displaying of the content reproduction apparatuses. The user selects, out of the content reproduction apparatuses thus presented in an above-described manner, a content reproduction apparatus which the user causes to reproduce the content. As such, this brings about an effect that the user can more easily select an apparatus whose information is preferentially provided to the user.

Alternatively, it is possible that the content delivery apparatus is achieved by a computer. In this case, the scope of the present invention encompasses a program and a computer-readable storage medium containing the program, each causing the computer to operate as functions, so as to achieve the content delivery apparatus by the computer.

Moreover, in order to obtain the above object, another content delivery apparatus of the present invention is configured so as to include:
reception means for receiving a content reproduction request which causes a specified content to be reproduced,
acquisition means for acquiring the specified content and content information on acquisition and reproduction of the specified content in response to the content reproduction request,;
attribute information acquisition means for acquiring, from a plurality of content reproduction apparatuses connected to the content delivery apparatus via a network, pieces of attribute information indicative of attributes of the respective plurality of content reproduction apparatuses;
specification means for specifying, based on the content information and the pieces of attribute information, at least one of the plurality of content reproduction apparatuses which can reproduce the specified content; and
delivery means for delivering the specified content acquired by the acquisition means, to the at least one of the plurality of content reproduction apparatuses, so as to cause the at lease one of the plurality of content reproduction apparatuses to reproduce the specified content acquired by the acquisition means.

As described so far, the content delivery apparatus of the present invention includes: the acquisition means for externally acquiring a content; the specification means for specifying, from a plurality of content reproduction apparatuses, at least one content reproduction apparatus which can reproduce the content; and the delivery means for delivering the content to the at least one content delivery apparatus thus specified by the specification means. Thus, it is made possible to bring about an effect that the user can surely view/listen to, via the content reproduction apparatus, the content which the user desires to view/listen to.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

### Industrial Applicability

The present invention can be used as a gateway apparatus, which externally acquires a content and delivers it to a content reproduction apparatus controlled by the gateway apparatus.

## Claims

1. A content delivery apparatus, comprising:
reception means for receiving a content reproduction request which causes a specified content to be reproduced;
acquisition means for acquiring the specified content and content information on acquisition and reproduction of the specified content in response to the content reproduction request;
attribute information acquisition means for acquiring, from a plurality of content reproduction apparatuses connected to the content delivery apparatus via a network, pieces of attribute information indicative of attributes of the respective plurality of content reproduction apparatuses;
specification means for specifying, based on the content information and the pieces of attribute information, at least one of the plurality of content reproduction apparatuses which can reproduce the specified content; and
delivery means for delivering the specified content acquired by the acquisition means, to the at least one of the plurality of content reproduction apparatuses, so as to cause the at lease one of the plurality of content reproduction apparatuses to reproduce the specified content acquired by the acquisition means.

2. A content delivery apparatus for delivering a content to at least one of a plurality of content reproduction apparatuses which are controlled by said content delivery apparatus, said content delivery apparatus comprising:
acquisition means for externally acquiring the content;
specification means for specifying at least one of the plurality of content reproduction apparatuses which can reproduce the content; and
content delivery means for delivering the content to the at least one of the plurality of content reproduction apparatuses which is specified by the specification means.

3. The content delivery apparatus as set forth in Claim 1 or 2, wherein:
the specification means specifies, as the at least one of the plurality of content reproduction apparatuses which can reproduce the specified content, at least one of the plurality of content reproduction apparatuses which supports a format of the specified content.

4. The content delivery apparatus as set forth in Claim 1 or 2, further comprising:
judgment means for judging which of the plurality of content reproduction apparatuses can reproduce the specified content whose format has been converted into a given format; and
conversion means for converting, into the given format, the format of the specified content acquired by the acquisition means,
the specification means specifying, as the at least one of the plurality of content reproduction apparatuses which can reproduce the specified content, at least one of the plurality of content reproduction apparatuses that is judged by the judgment means to be able to reproduce the specified content whose format has been converted into the given format, and
the delivery means delivering, to the at least one of the plurality of content reproduction apparatuses, the specified content whose format has been converted into the given format.

5. The content delivery apparatus as set forth in Claim 1 or 2, wherein:
the specification means specifies, as the at least one of the plurality of content reproduction apparatuses which can reproduce the specified content, at least one of the plurality of content reproduction apparatuses which supports a delivery method to be used while the specified content is being delivered.

6. The content delivery apparatus as set forth in Claim 1 or 2, further comprising judgment means for judging which of the plurality of content reproduction apparatuses can reproduce the specified content which has been delivered by a different delivery method than a predetermined delivery method,
the specification means specifying, as the at least one of the plurality of content reproduction apparatus which can reproduce the specified content, at least one of the plurality of content reproduction apparatuses which is judged by the judgment means to be able to reproduce the specified content which has been delivered by the different delivery method than the predetermined delivery method, and
the delivery means delivering, by the different delivery method than the predetermined method, the specified content to the at least one of the plurality of content reproduction apparatuses.

7. The content delivery apparatus as set forth in Claim 1 or 2, further comprising selection means for causing, in a case where the specification means specifies two or more of the plurality of content reproduction apparatuses, a user to select one of the two or more of the plurality of content reproduction apparatuses to which the specified content should be delivered,
the content delivery means delivering the specified content to the one of the two or more of the plurality of content reproduction apparatuses that is selected by the user via the selection means.

8. The content delivery apparatus as set forth in Claim 7, wherein:
the selection means provides the user with information on a format of the specified content.

9. The content delivery apparatus as set forth in Claim 7, wherein:
the selection means more preferentially provides the user with (i) information on that of the two or more of the plurality of content reproduction apparatuses which can directly reproduce the specified content that has been acquired by the acquisition means, than (ii) information on another of the two or more of the plurality of content reproduction apparatuses which can reproduce the specified content whose format has been converted into a given format by the conversion means.

10. A program causing a content delivery apparatus recited in any one of Claims 1 through 9 to operate, said program causing a computer to function as each of the means of the content delivery apparatus.

11. A computer-readable storage medium, in which the program as set forth in Claim 10 is stored.
